# FASCICULE DE BREVET EUROPEEN

(11) **EP 4 219 203 B1**
(45) Date de publication et mention de la délivrance du brevet: **04.09.2024**
(21) Numéro de dépôt: 23152709.4
(22) Date de dépôt: 20.01.2023
(51) Int. Cl.: B60H 1/24

(54) **DISPOSITIF D'AÉRATION POUR UN TOIT DE VÉHICULE AUTOMOBILE**
BELÜFTUNGSVORRICHTUNG FÜR EIN FAHRZEUGDACH
VENTILATION DEVICE FOR A MOTOR VEHICLE ROOF

(30) Priorité: 26.01.2022 FR 2200681
(43) Date de publication de la demande: 02.08.2023
(73) Titulaire: Cherou, Bastien, 69003 Lyon (FR); Spitale, Benoit, 59170 Croix (FR)
(72) Inventeur: Cherou, Bastien, 69003 Lyon (FR); Spitale, Benoit, 59170 Croix (FR)
(74) Mandataire: LLR

(56) Documents cités:
- FR-A- 782 616
- JP-A- S55 110 613
- JP-U- H0 715 406
- US-A1- 2009 162 188

## Description

L'invention concerne un aérateur de toit de véhicule automobile.

Un aérateur rotatif pour véhicule automobile est un aérateur classiquement utilisé pour permettre l'extraction d'air du véhicule, par exemple d'un espace formant le volume utile d'un véhicule utilitaire.

Un tel type d'aérateur est formé, au niveau de sa partie s'étendant à l'extérieur du véhicule, d'un stator et d'un rotor. Le stator est fixé, par exemple vissé, sur une face extérieure du toit du véhicule. Le stator comprend une ouverture traversante qui s'étend au-dessus d'un trou pratiqué dans le toit du véhicule. Il comprend des roulements à billes (ces derniers peuvent être portés par le stator ou le rotor), par exemple deux, permettant une rotation du rotor.

Le rotor est quant à lui fixé au stator de manière à pouvoir pivoter autour d'un axe central.

Il comprend des ailettes lui permettant de tourner sur lui-même grâce à un flux d'air, par exemple lorsque le véhicule est en mouvement. Cette rotation permet de générer une dépression et donc une aspiration de l'air vers l'extérieur du véhicule, qui est dès lors ventilée.

Un tel aérateur est intéressant car il ne nécessite pas de source d'énergie électrique pour le faire fonctionner.

On retrouve, contre la face interne du toit du véhicule, un obturateur. Ce dernier permet de contrôler la capacité d'aspiration de l'aérateur de toit rotatif. De manière classique, cet obturateur comprend un corps principal fixé, avec ou sans adaptateur, au stator par des moyens de fixation traversants le toit, par exemple des vis.

Le corps principal de l'obturateur est perforé pour former plusieurs passages d'air vers l'extérieur du véhicule. Un organe d'obturation est placé entre le corps principal et la face interne du toit, en étant de forme complémentaire à celle du corps principal. Un utilisateur peut, par une languette s'étendant depuis l'organe d'obturation et traversant le corps principal, déplacer l'organe d'obturation (par rotation ou translation en fonction de la forme de l'obturateur) afin de permettre ou non le passage d'air ou en contrôler le débit.

Un aérateur d'air décrit ci-dessus comprend un inconvénient principal en termes d'implantation sur un toit de véhicule.

En effet, un stator décrit ci-dessus a classiquement une forme ronde et une ouverture traversante elle aussi ronde. En effet, et sur un toit de véhicule automobile plat, on privilégie la réalisation d'un trou rond (forme la plus efficace), le pourtour rond de l'orifice traversant venant s'étendre autour du trou réalisé dans le toit.

Des difficultés de montage interviennent lorsque le toit n'est pas plat, mais par exemple ondulé. La forme ronde du stator pose problème car il n'est souvent pas possible de plaquer ce dernier autour d'un orifice de manière à assurer un bon fonctionnement de l'aérateur de toit. L'aérateur de toit est en effet très souvent trop grand pour ne loger que sur une ondulation d'un toit de véhicule automobile.

Par exemple, si un trou de forme oblongue est réalisé dans le toit au niveau d'une ondulation s'étendant sur un premier niveau d'ondulations et entourée de deux ondulations s'étendant sur un niveau d'ondulation différent, il est probable que le pourtour de l'orifice traversant du stator s'étende au-dessus de ces deux ondulations. De ce fait, le pourtour de l'orifice traversant du stator ne peut pas épouser le pourtour du trou réalisé dans le toit, ce qui conduit à un mauvais plaquage du stator empêchant le bon fonctionnement de l'aérateur de toit (i.e. création d'une dépression pour permettre une circulation d'air au travers de l'aérateur de toit). Il peut dès lors être nécessaire d'effectuer une étape de reprise, par exemple en colmatant des espaces existants entre le stator et la face extérieure du toit (du fait d'un défaut de plaquage), par exemple par masticage.

En d'autres termes, un stator tel que décrit ci-dessus ne peut pas s'adapter à tous types de formes de toits. Il est dès lors nécessaire, pour éviter toute étape de reprise, de choisir un modèle d'aérateur de toit pouvant être installé de manière fonctionnelle sur un toit de véhicule automobile au détriment de ses performances intrinsèques, et ce pour un même utilisateur par exemple. Comme expliqué, il est alternativement possible d'effectuer une reprise artisanale de l'aérateur installé mais cela n'est pas satisfaisant, notamment sur un volume élevé d'installations.

Le document JP S55 110613 A divulgue un aérateur de toit de véhicule automobile comprenant un stator et un rotor à ailettes, dans lequel le stator est fixé sur une face extérieure d'un toit d'un véhicule automobile et comprend une ouverture qui est formée sur une parois du stator et qui forme un canal de circulation d'air qui peut être obturé par un volet coulissant, et le rotor à ailettes est positionné à l'intérieur du stator et comprend une turbine, les ailettes participant à la mise en rotation du rotor et ainsi à la création d'une dépression pour aspirer l'air de l'intérieur du véhicule automobile à travers l'ouverture qui est formée sur la parois du stator.

Les documents JP H07 15406 U, US 2009/162188 A1 et FR 782 616 A divulguent quant à eux des aérateurs pour véhicule automobile.

L'invention a notamment pour but de fournir un aérateur de toit de véhicule automobile pouvant facilement s'adapter à plusieurs types de toit de manière simplifiée par rapport aux aérateurs de toit selon l'art antérieur.

A cet effet, l'invention a pour objet un aérateur de toit de véhicule automobile selon la revendication 1.

Ainsi, on obtient un aérateur de toit de véhicule automobile comprenant un même stator adapté pour différents types de toits. En effet, et en fonction de la forme du toit, il est possible de réaliser des trous de différentes tailles sur le toit du véhicule automobile et de choisir de monter le stator sur le toit du véhicule automobile avec ou sans organe de réduction amovible afin de s'assurer que le pourtour de l'ouverture traversante du stator épouse de pourtour du trou réalisé. Cela permet de s'assurer d'un bon fonctionnement de l'aérateur de toit de véhicule automobile pour différentes formes de toits sans avoir à prévoir une étape de reprise après fixation de l'aérateur de toit.

Selon l'invention :
- l'organe de réduction amovible comprend une seconde ouverture traversante formant un second canal de circulation d'air de taille inférieure à celui du premier canal de circulation d'air ; et
- l'aérateur de toit comprend en outre
un obturateur configuré pour être fixé sur une face intérieure
d'un toit de véhicule automobile, l'obturateur comprenant une partie fixe et une partie mobile entre une position de passage d'air et une position d'obturation d'air s'étendant par-dessus la partie fixe. Ainsi, on obtient un obturateur facilement maniable par un opérateur et permettant une obturation complète du passage d'air.

Suivant d'autres caractéristiques optionnelles de l'aérateur de toit selon l'invention prises seules ou en combinaison :
- la seconde ouverture traversante a une forme différente de la première ouverture traversante. Cela permet une adaptation supplémentaire à la forme du toit d'un véhicule automobile en permettant de réaliser des trous de formes différentes ;
- l'organe de réduction amovible est réalisé dans un matériau plus souple que celui d'un corps principal du stator;
- l'organe de réduction amovible comprend en outre des pions de fixation collaborant avec des
   orifices de fixation portés par le corps principal du stator. Cela permet de fixer de manière sûr et simple l'organe de réduction amovible dans la première ouverture traversante du stator ;
- le stator comprend en outre un organe d'étanchéité à l'air recouvrant une interface entre le corps
   principal du stator et l'organe de réduction amovible. On évite ainsi tout passage d'air préjudiciable au bon fonctionnement de l'aérateur de toit ;
- le corps principal du stator comprend une structure d'appui de l'organe de réduction amovible sur le corps principal du stator. Cela permet d'assurer une bonne mise en place de l'organe de réduction amovible ainsi qu'une bonne rigidité de l'ensemble formé
- l'aérateur de toit comprend en outre un organe de verrouillage en translation du rotor par rapport
   au stator ;
- la partie mobile comprend au moins un pion de guidage s'étendant dans une fente de guidage ménagée dans la partie fixe de l'obturateur. Il s'agit d'un moyen efficace de déplacement de la partie mobile entre la position de passage d'air et la position d'obturation d'air. Le pion de guidage et la fente de guidage permettent aussi un ajustement entre la partie fixe et la partie mobile de l'obturateur ;
- la fente de guidage définit au moins une position intermédiaire du pion de guidage entre une position d'ouverture maximale de l'obturateur et à une position d'obturation maximale du passage d'air. Cela permet un ajustement fin du débit d'air traversant l'aérateur de toit ; et
- la partie fixe comprend des rives de fixation et de guidage de la partie mobile. La présence de rives de fixation permet de concevoir un obturateur plus compact que selon l'art antérieur.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue éclatée d'un aérateur de toit de véhicule automobile selon l'invention,
[Fig. 2] la figure 2 est une vue de face d'un stator comprenant un organe de réduction monté sur un corps principal du stator,
[Fig. 3] la figure 3 est une vue d'un corps principal d'un stator et d'un organe de réduction séparé du corps principal du stator,
[Fig. 4] la figure 4 est une vue de face des parties fixe et mobile d'un obturateur d'un aérateur de toit de véhicule automobile selon l'invention,
[Fig. 5] la figure 5 est une vue de face de portions des parties fixe et mobile d'un obturateur d'un aérateur de toit de véhicule automobile selon l'invention, et

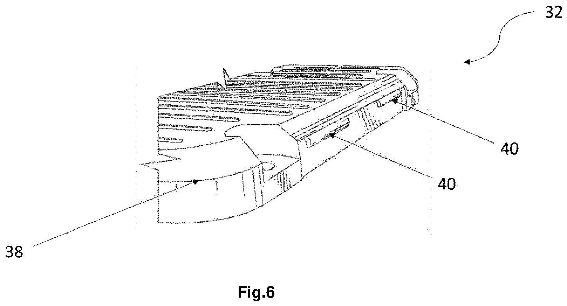

[Fig. 6] la figure 6 est une vue en perspective d'une partie fixe d'un obturateur d'un aérateur de toit de véhicule automobile selon l'invention.

### Description détaillée

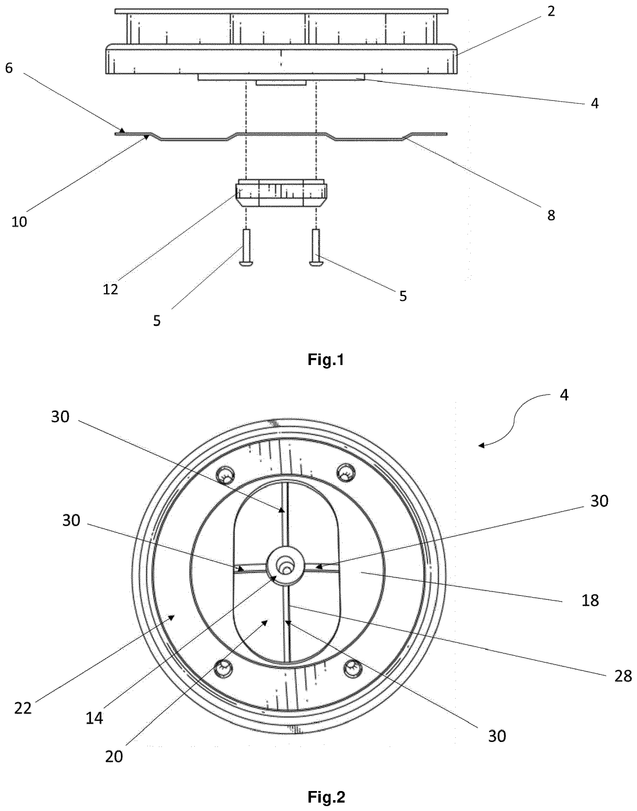

On se réfère désormais à la figure 1 représentant une vue éclatée d'un aérateur de toit de véhicule automobile (nommé dans la suite de la description « aérateur de toit »).

Cet aérateur de toit comprend tout d'abord un rotor 2. Il s'agit d'un rotor à ailettes et comprenant une turbine, les ailettes participant à la mise en rotation du rotor et ainsi à la création d'une dépression pour l'aération du véhicule automobile. Cette mise en rotation par les ailettes peut être le résultat de l'action d'un flux d'air, classiquement du vent, sur les ailettes ou encore d'une pression d'air s'exerçant sur les ailettes lorsque le véhicule est en mouvement.

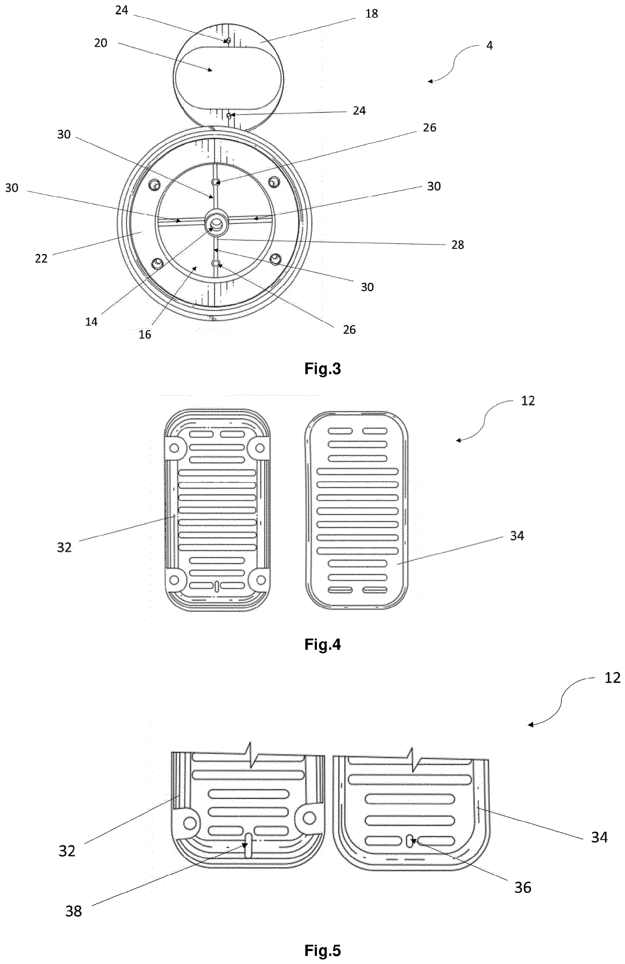

Le rotor 2 est fixé sur un stator 4 configuré pour être fixé sur une face extérieure 6 d'un toit 8 de véhicule automobile. Le stator 4 comprend plusieurs orifices (quatre visibles sur les figures 2 et 3) permettant la fixation du stator 4 sur la face extérieure 6 d'un toit 8 de véhicule automobile. Des moyens de fixation 5, par exemple des boulons (d'autres moyens de fixation pourraient être utilisés), peuvent traverser un obturateur 12 (décrit par la suite et visible à la figure 1) placés à l'intérieur du véhicule automobile, traverser le toit 8 et les orifices de fixation 10 du stator 4. Le stator 4 et ainsi fixé sur la face extérieure 6 d'un toit 8 de véhicule automobile.

Le rotor 2 est monté mobile en rotation par rapport au stator 4. Le stator 4 peut pour cela comprendre une colonne de guidage 14 traversée par une tige métallique, le rotor 2 comprenant des roulements à billes, par exemple deux, permettant sa rotation.

Le fonctionnement de l'aérateur de toit, correspondant à la mise en application du principe d'extraction d'air par rotation d'un rotor équipé d'une turbine, est connu et ne sera pas décrit davantage dans la présente demande.

Afin de laisser passer l'air, le stator 4 comprend une première ouverture traversante 16. Cette première ouverture traversante 16 est de préférence de forme ronde (forme préférentielle si sa mise en oeuvre est possible) et est l'ouverture la plus grande de toutes les configurations du stator 4. La première ouverture traversante 16 forme un premier canal de circulation d'air.

Le stator 4 comprend en outre au moins un organe de réduction (appelé par la suite « organe de réduction amovible 18 ») de la taille de la première ouverture traversante 16 configuré pour être monté de manière amovible dans la première ouverture traversante 16. Cet organe de réduction amovible 18 comprend une seconde ouverture traversante 20 formant un second canal de circulation d'air de taille inférieure à celui du premier canal de circulation d'air.

On entend par « amovible » un organe pouvant être monté et démonté à volonté, par exemple par clipsage, vissage, boulonnage, etc.

Le nombre d'organes de réduction amovibles 18 peut varier. On peut envisager la présence d'organes de réduction amovibles 18 alternatifs comprenant des ouvertures traversantes de tailles différentes ou encore de plusieurs organes de réduction amovibles 18 montés les uns dans les autres de manière à avoir au sein d'une même structures différentes configurations possibles.

Comme expliqué plus haut, la présence d'un ou plusieurs organes de réduction amovibles 18 permet d'envisager la réalisation de trous de tailles différentes dans le toit 8 tout en conservant un contact satisfaisant entre le stator 4 et la face extérieure 6 du toit 8.

De préférence, la seconde ouverture traversante 20 a une forme différente de la première ouverture traversante 16. Cela permet une adaptation supplémentaire à la forme du toit d'un véhicule automobile en permettant de réaliser des trous de formes différentes.

Par exemple, et pour un toit de forme ondulée, il peut être préférable de réaliser un trou de forme oblongue dans le toit afin qu'il soit assez grand pour réaliser une aération suffisante. Dès lors, et comme illustré sur les figures 2 et 3, l'organe de réduction amovible 18 peut être de forme oblongue afin d'épouser le pourtour d'un trou de forme oblongue réalisé sur le toit 8. La longueur de la seconde ouverture traversante 20 de forme oblongue peut, comme illustré sur les figures 2 et 3, être très proche du diamètre de la première ouverture traversante 16 afin d'obtenir un second canal de circulation d'air permettant un débit d'air le plus important possible.

Le montage de l'organe de réduction amovible 18 dans la première ouverture traversante 16 correspond à un montage de ce dernier sur un corps principal 22 du stator 4. L'organe de réduction amovible 18 peut être réalisé dans un matériau plus souple que celui du corps principal 22 du stator 4, par exemple en utilisant un polymère plus souple qu'un autre polymère utilisé pour réaliser le corps principal 22 du stator 4.

Dans une optique de fixation, l'organe de réduction amovible 18 peut comprendre des pions de fixation 24 (deux sur l'exemple illustré sur les figures) collaborant avec des orifices de fixation 26 portés par le corps principal 22 du stator 4. Cela permet la fixation de l'organe de réduction amovible 18 sur le corps principal 22. Ces pions de fixation 24 permettent également d'indexer et de centrer l'organe de réduction amovible 18 sur le corps principal 22 du stator 4. Il est possible de réaliser des pions de fixation 24 de taille légèrement supérieure à celle des orifices de fixation 26, les pions de fixation 24 étant réalisés dans un matériau plus souple que celui du corps principal 22 dans lequel les orifices de fixation sont ménagés (par exemple en étant venus de matière avec l'organe de réduction amovible 18). Cela permet une fixation de l'organe de réduction amovible 18 sur le corps principal 22 du stator 4 par ajustement serré.

Les orifices de fixation 26 peuvent être ménagés, comme illustré sur les figures 2 et 3, sur une structure d'appui 28 de l'organe de réduction amovible 18 sur le corps principal 22 du stator 4. La structure d'appui 28 constitue également un renfort du stator 4.

Cette structure d'appui 28 peut, comme vu sur les figures 2 et 3, être formée par quatre tiges d'appui 30 traversant la première ouverture traversante 16 et formant une croix portant la colonne de guidage 14. La forme prise par la structure d'appui 28 peut bien évidemment varier, par exemple en comprenant plusieurs tiges de soutien parallèles entre elles et traversant la première ouverture traversante 16.

La structure d'appui 28 peut également être mise en oeuvre sans orifice de fixation 26. Elle permet dans tous les cas d'assurer une bonne mise en place de l'organe de réduction 18 qui vient s'appuyer contre elle (ce qui définit une fin de mise en place de l'organe de réduction amovible 18), *a fortiori* si elle comprend des orifices de fixation 26.

Il est possible que le stator 4 comprenne un organe d'étanchéité à l'air recouvrant une interface entre le corps principal 22 du stator 4 et l'organe de réduction amovible 18. Cela permet, en complément d'un plaquage du stator 4 sur le pourtour du trou réalisé dans le toit 8, de s'assurer du bon fonctionnement de l'aérateur de toit en s'assurant de l'étanchéité de cette interface. On évite ainsi tout passage d'air préjudiciable au bon fonctionnement de l'aérateur de toit. Il est également possible de mettre en place un second organe d'étanchéité, par exemple une mousse, entre le stator 4 et la face extérieure 6 d'un toit 8 de véhicule automobile.

L'organe d'étanchéité peut par exemple être formé par une mousse en polyuréthane placée au niveau de l'interface susmentionnée. Il peut être judicieux de prévoir un adhésif, par exemple double face, permettant de fixer l'organe d'étanchéité au stator 4. Cet adhésif permet de retirer l'organe d'étanchéité de manière simplifiée. L'organe d'étanchéité peut également être découpé pour être ajuster à l'interface susmentionnée et mis en place après découpe grâce à cet adhésif.

L'aérateur de toit peut comprendre un organe de verrouillage en translation du rotor 2 par rapport au stator 4. Il peut par exemple s'agir d'un ensemble formé d'une vis et d'une contre-vis s'étendant de l'obturateur 12 jusqu'au rotor 2 afin de verrouiller l'ensemble.

Comme entrevu plus haut, l'aérateur de toit comprend un obturateur 12 configuré pour être fixé sur une face intérieure 10 d'un toit 8 de véhicule automobile, l'obturateur 12 comprenant une partie fixe 32 et une partie mobile 34 entre une position de passage d'air et une position d'obturation d'air s'étendant par-dessus la partie fixe 32.

Ainsi, il est facile de déplacer la partie mobile 34 (directement accessible pour un utilisateur), recouvrant la partie fixe 32, afin de régler, voire d'obturer, le flux d'air passant à travers l'aérateur de toit. Cela est avantageux par rapport à une partie mobile placée sous une partie fixe, la pression de l'air ayant tendance à repousser cette partie mobile de la partie fixe, ce qui a tendance à empêcher une obturation complète. De plus, la manipulation d'une partie mobile 34 s'étendant au-dessus de la partie fixe 32 permet de se passer des languettes décrites plus haut.

La partie mobile 34 est de préférence mobile en translation et a une forme, par exemple rectangulaire, permettant d'obtenir un obturateur 12 compact et pouvant lui aussi s'adapter à différentes formes de toit 8 de véhicule automobile. Il est par ailleurs possible d'optimiser les possibilités d'implantation de l'aérateur de toit selon l'invention en adaptant la largeur de l'obturateur 12. La forme de l'obturateur 12 ainsi que la mobilité de la partie mobile 34 peuvent varier par rapport à l'exemple illustré sur les figures.

La partie fixe 32 et la partie mobile 34 ont dans l'exemple décrit une forme complémentaire afin d'être en contact l'une avec l'autre, notamment pour la mise en place de moyens de guidage comme cela va être décrit.

Tout d'abord, la partie mobile 34 peut comprendre au moins un pion de guidage 36 s'étendant dans une fente de guidage 38 ménagée dans la partie fixe 32 de l'obturateur 12 (on pourrait envisager la présence de plusieurs pions de guidage 36, chacun s'étendant dans une fente de guidage 38). Il s'agit d'un moyen simple de déplacement de la partie mobile entre la position de passage d'air et la position d'obturation d'air, les extrémités de la fente de guidage 38 formant des butées pour le pion de guidage 36, les deux butées correspondant respectivement à une position d'ouverture maximale de l'obturateur 12 et à une position d'obturation maximale. Le pion de guidage 36 et la fente de guidage 38 permettent aussi un ajustement entre la partie fixe 32 et la partie mobile 34 de l'obturateur 12.

De manière avantageuse, la fente de guidage 38 peut définir au moins une position intermédiaire du pion de guidage 36 entre une position d'ouverture maximale de l'obturateur 12 et à une position d'obturation maximale du passage d'air. Cela permet un ajustement fin du débit d'air traversant l'aérateur de toit. Par exemple, la fente de guidage 38 peut être crantée, chaque cran définissant une position potentielle du pion de guidage 36. La mise en oeuvre d'un dispositif générant du bruit lors du déplacement du pions de guidage 36, notamment lorsque ce dernier arrive en butée dans la fente de guidage 38, est avantageuse en tant que dispositif d'information auprès d'un utilisateur du placement de la partie mobile 34 dans une position particulière.

Avantageusement, la partie fixe 32 de l'obturateur 12 comprend des rives de fixation et de guidage 40 de la partie mobile 34 de l'obturateur 12. La partie mobile 34 peut dès lors coulisser le long de ces dernières sans à-coups. Cela permet également de réaliser un obturateur 12 plus compact que ceux de l'art antérieur.

### Liste de références

- 2 :: rotor
- 4 :: stator
- 5 :: moyens de fixation
- 6 :: face extérieure
- 8 :: toit
- 10 :: face intérieure
- 12 :: obturateur
- 14 :: colonne de guidage
- 16 :: première ouverture traversante
- 18 :: organe de réduction amovible
- 20 :: seconde ouverture traversante
- 22 :: corps principal
- 24 :: pions de fixation
- 26 :: orifice de fixation
- 28 :: structure d'appui
- 30 :: tiges d'appui
- 32 :: partie fixe
- 34 :: partie mobile
- 36 :: pions de guidage
- 38 :: fente de guidage
- 40 :: rives de fixation et de guidage

## Revendications

1. Aérateur de toit de véhicule automobile comprenant un rotor (2) à ailettes et un stator (4), le rotor (2) à ailettes comprenant une turbine, les ailettes participant à la mise en rotation du rotor (2) et ainsi à la création d'une dépression pour l'aération du véhicule automobile et le rotor (2) à ailettes étant fixé sur le stator (4), le stator (4) étant configuré pour être fixé sur une face extérieure (6) d'un toit (8) de véhicule automobile, le stator (4) comprenant une première ouverture traversante (16) formant un premier canal de circulation d'air, **caractérisé en ce que** le stator (4) comprend en outre au moins un organe de réduction (18) de la taille de la première ouverture traversante (16) configuré pour être monté de façon amovible dans la première ouverture traversante (16), l'organe de réduction amovible (18) comprend une seconde ouverture traversante (20) formant un second canal de circulation d'air de taille inférieure à celui du premier canal de circulation d'air, l'aérateur de toit de véhicule automobile comprend en outre un obturateur (12) configuré pour être fixé sur une face intérieure (10) d'un toit (8) de véhicule automobile, l'obturateur (12) comprend une partie fixe (32) et une partie mobile (34) entre une position de passage d'air et une position d'obturation d'air s'étendant par-dessus la partie fixe (32).

2. Aérateur de toit selon la revendication 1, dans lequel la seconde ouverture traversante (20) a une forme différente de la première ouverture traversante (16).

3. Aérateur de toit selon l'une quelconque des revendications précédentes, dans lequel l'organe de réduction amovible (18) est réalisé dans un matériau plus souple que celui d'un corps principal (22) du stator (4).

4. Aérateur de toit selon la revendication 3, dans lequel l'organe de réduction amovible (18) comprend en outre des pions de fixation (24) collaborant avec des orifices de fixation (26) portés par le corps principal (22) du stator (4).

5. Aérateur de toit selon l'une quelconque des revendications 3 ou 4, dans lequel le stator (4) comprend en outre un organe d'étanchéité à l'air recouvrant une interface entre le corps principal (22) du stator (4) et l'organe de réduction amovible (18).

6. Aérateur de toit selon l'une quelconque des revendications 3 à 5, dans lequel le corps principal (22) du stator (4) comprend une structure d'appui (28) de l'organe de réduction amovible (18) sur le corps principal (22) du stator (4).

7. Aérateur de toit selon l'une quelconque des revendications précédentes, dans lequel la partie mobile (34) comprend au moins un pion de guidage (36) s'étendant dans une fente de guidage (38) ménagée dans la partie fixe (32) de l'obturateur (12).

8. Aérateur de toit selon la revendication 7, dans lequel la fente de guidage (38) définit au moins une position intermédiaire du pion de guidage (36) entre une position d'ouverture maximale de l'obturateur (12) et une position d'obturation maximale du passage d'air.

9. Aérateur de toit selon l'une quelconque des revendications précédentes, dans lequel la partie fixe (32) comprend des rives de fixation et de guidage (40) de la partie mobile (34).

## Patentansprüche

1. Dachlüfter für Kraftfahrzeug, umfassend einen Klappenrotor (2) und einen Stator (4), wobei der Klappenrotor (2) eine Turbine umfasst, wobei die Klappen an dem Bewirken der Drehung des Rotors (2) und so an dem Erzeugen eines Unterdrucks für die Belüftung des Kraftfahrzeugs beteiligt ist und wobei der Klappenrotor (2) auf dem Stator (4) befestigt ist, wobei der Stator (4) eingerichtet ist, um auf einer Außenfläche (6) eines Dachs (8) eines Kraftfahrzeugs befestigt zu werden, wobei der Stator (4) eine erste Durchgangsöffnung (16) umfasst, die einen ersten Kanal für die Luftzirkulation bildet,
**dadurch gekennzeichnet, dass**
der Stator (4) ferner wenigstens ein Reduzierungsorgan (18) zum Reduzieren der Größe der ersten Durchgangsöffnung (16) umfasst, das eingerichtet ist, um in der ersten Durchgangsöffnung (16) lösbar montiert zu werden,
das lösbare Reduzierungsorgan (18) eine zweite Durchgangsöffnung (20) umfasst, die einen zweiten Kanal für die Luftzirkulation bildet, dessen Größe geringer ist als die des ersten Kanals für die Luftzirkulation,
der Dachlüfter für Kraftfahrzeug ferner einen Verschluss (12) umfasst, der eingerichtet ist, um auf einer Innenfläche (10) eines Dachs (8) eines Kraftfahrzeugs befestigt zu werden,
der Verschluss (12) einen ortsfesten Teil (32) und einen Teil (34), der beweglich ist zwischen einer Luftdurchlassposition und einer Luftverschlussposition und sich oberhalb des ortsfesten Teils (32) erstreckt, umfasst.

2. Dachlüfter nach Anspruch 1, wobei die zweite Durchgangsöffnung (20) eine Form aufweist, die sich von der ersten Durchgangsöffnung (16) unterscheidet.

3. Dachlüfter nach einem der vorhergehenden Ansprüche, wobei das lösbare Reduzierungsorgan (18) aus einem Material realisiert ist, das weicher ist als das eines Hauptkörpers (22) des Stators (4).

4. Dachlüfter nach Anspruch 3, wobei das lösbare Reduzierungsorgan (18) ferner Befestigungszapfen (24 umfasst, die mit Befestigungsöffnungen (26), die von dem Hauptkörper (22) des Stators (4) getragen werden, zusammenwirken.

5. Dachlüfter nach einem der Ansprüche 3 oder 4, wobei der Stator (4) ferner ein Luftdichtorgan umfasst, das eine Schnittstelle zwischen dem Hauptkörper (22) des Stators (4) und dem lösbaren Reduzierungsorgan (18) abdeckt.

6. Dachlüfter nach einem der Ansprüche 3 bis 5, wobei der Hauptkörper (22) des Stators (4) eine Abstützstruktur (28) zum Abstützen des lösbaren Reduzierungsorgans (18) auf dem Hauptkörper (22) des Stators (4) umfasst.

7. Dachlüfter nach einem der vorhergehenden Ansprüche, wobei der bewegliche Teil (34) wenigstens einen Führungszapfen (36) umfasst, der sich in einem Führungsschlitz (38), der in dem ortsfesten Teil (32) des Verschlusses (12) vorgesehen ist, erstreckt.

8. Dachlüfter nach Anspruch 7, wobei der Führungsschlitz (38) wenigstens eine Zwischenstellung des Führungszapfens (36) zwischen einer Stellung zur maximalen Öffnung des Verschlusses (12) und einer Stellung zur maximalen Verschließung des Luftdurchlasses definiert.

9. Dachlüfter nach einem der vorhergehenden Ansprüche, wobei der ortsfeste Teil (32) Randleisten zur Befestigung und zur Führung (40) des beweglichen Teils (34) umfasst.

## Claims

1. Motor vehicle roof ventilator comprising a bladed rotor (2) and a stator (4), the bladed rotor (2) comprising a turbine, the blades participating in the rotation of the rotor (2) and thus in the creation of a negative pressure for ventilating the motor vehicle, and the bladed rotor (2) being fixed to the stator (4), the stator (4) being configured for attachment to an outer face (6) of a motor vehicle roof (8), the stator (4) comprising a first through-aperture (16) forming a first airflow channel, **characterized in that** the stator (4) further comprises at least one reduction member (18) of the size of the first through-aperture (16), configured to be removably mounted in the first through-aperture (16), the removable reduction member (18) comprises a second through opening (20) forming a second airflow channel of smaller size than that of the first airflow channel, the motor vehicle roof ventilator further comprises a shutter (12) configured to be fixed to an inner face (10) of a motor vehicle roof (8), the shutter (12) comprises a fixed portion (32) and a portion (34) movable between an air passage position and an air shut-off position extending over the fixed portion (32).

2. Roof ventilator according to claim 1, wherein the second through opening (20) has a different shape to the first through opening (16).

3. Roof ventilator according to any of the preceding claims, in which the removable reduction member (18) is made of a softer material than that of a main body (22) of the stator (4).

4. Roof ventilator according to claim 3, wherein the removable reduction member (18) further comprises fastening pins (24) cooperating with fastening holes (26) carried by the main body (22) of the stator (4).

5. Roof ventilator according to any one of claims 3 or 4, wherein the stator (4) further comprises an air sealing member covering an interface between the main body (22) of the stator (4) and the removable reduction member (18).

6. Roof ventilator according to any one of claims 3 to 5, wherein the main body (22) of the stator (4) comprises a support structure (28) for the removable reduction member (18) on the main body (22) of the stator (4).

7. Roof vent according to any of the preceding claims, wherein the movable part (34) comprises at least one guide pin (36) extending into a guide slot (38) provided in the fixed part (32) of the shutter (12).

8. Roof vent according to claim 7, in which the guide slot (38) defines at least one intermediate position of the guide pin (36) between a position of maximum opening of the shutter (12) and a position of maximum closure of the air passage.

9. Roof ventilator according to any of the preceding claims, in which the fixed part (32) comprises ribs (40) for fixing and guiding the movable part (34).
